# EUROPÄISCHE PATENTANMELDUNG

(11) **EP 4 464 991 A2**
(43) Veröffentlichungstag der Anmeldung: **20.11.2024**
(21) Anmeldenummer: 24176505.6
(22) Anmeldetag: 17.05.2024
(51) Int. Cl.: G01F 9/00, A62C 5/02

(54) **VERFAHREN ZUR VOLUMENSTROMBESTIMMUNG, SCHAUMZUBEREITUNGSVORRICHTUNG UND LÖSCHWASSERPUMPENEINRICHTUNG**

(30) Priorität: 17.05.2023 DE 102023113036
(71) Anmelder: Albert Ziegler GmbH, 89537 Giengen a. d. Brenz (DE)
(72) Erfinder: Boden, Ingo, 89129 Langenau (DE); Sing, Florian, 86735 Forheim (DE); Ockert, Niels, 89537 Giengen (DE)
(74) Vertreter: Patentanwälte Magenbauer & Kollegen Partnerschaft mbB

(57) **Zusammenfassung**

Ein erfindungsgemäßes Verfahren zur Volumenstrombestimmung für Schaumzumischsysteme in Löschfahrzeugen läuft nach folgenden Schritten ab:
- Ermittlung einer Referenz-Drosselkurve (35) einer Kreiselpumpe (12) bei einer Referenz-Drehzahl (nₙ), wobei die Referenz-Drosselkurve (35) eine Abhängigkeit eines Referenz-Drucks (pₙ) von einem Referenz-Volumenstrom (Qₙ) wiedergibt und Abspeicherung der Referenz-Drosselkurve (35) in einer Speichereinheit,
- Messung eines Ist-Drucks (pᵢ) bei einer Ist-Drehzahl (nᵢ) und Berechnung eines zugehörigen Berechnungs-Referenz-Drucks (pₙ) der Referenz-Drosselkurve (35) über die Beziehung pₙ = pᵢ (nₙ/ nᵢ)²,
- Berechnung eines zum Berechnungs-Referenz-Druck (pₙ) gehörenden Berechnungs-Referenz-Volumenstroms (Qₙ) anhand der Referenz-Drosselkurve (35),
- Berechnung eines Ist-Volumenstroms (Qᵢ) über folgende Beziehung Qᵢ = Qₙ (nᵢ/ nₙ).

## Beschreibung

Die Erfindung betrifft ein Verfahren zur Volumenstrombestimmung für Schaumzumischsysteme in Löschfahrzeugen.

Schaumzubereitungsvorrichtungen sind insbesondere auf dem Gebiet des Feuerwehrwesens bereits seit Langem bekannt. Einschlägig hierbei ist die Norm DIN EN 163277.

Die erwähnten Schaumzubereitungsvorrichtungen sind in der Regel in ein Feuerwehrfahrzeug eingebaute Systeme zur Verbesserung der Löscheffizienz. Hierbei werden dem Löschwasser vor oder nach der Feuerlöschkreiselpumpe chemische Lösungen oder Schaummittelkonzentrate zugeführt. Zur endgültigen Schaumbildung kann Druckluft injiziert werden.

Die Schaumzubereitungsvorrichtungen können als Druckzumischanlagen (DZA) ausgebildet sein, bei der eine Schaummittelpumpe zum Einsatz kommt, mit der das Schaummittel in den Wasserstrom bei einem höheren Druck als den Wasserdruck injiziert wird. Sobald eine Wasser-Schaummittel-Lösung hergestellt ist, wird der endgültige Schaum erzeugt, in dem Luft am Lösch-Strahlrohr als "Strahlrohrverschäumung" eingeleitet wird.

Eine Alternative zur "Strahlrohrverschäumung" ist eine sogenannte Druckluftschaumanlage (DLS), bei der dem Löschwasser nach einer Feuerlöschkreiselpumpe Schaummittel und Luft jeweils unter Druck kontinuierlich zugeführt werden.

Alternativ ist es möglich, eine saugseitige Schaumzumischung vorzusehen.

Gegenwärtig ist es erforderlich zur Ermittlung der Zumischrate (ZMR), also dem Mischungsverhältnis von Wasser und Schaummittel, einerseits den Volumenstrom des Schaummittels als auch andererseits den Volumenstrom des Wassers messtechnisch zu erfassen. Diese Messtechnik macht neben dem kostenaufwändigen Einsatz von Volumenstrommessgeräten in der Regel auch einen großen Einsatz von Rohrleitungen zur Strömungsberuhigung erforderlich. Diese Strömungsberuhigung ist für die Genauigkeit der Messergebnisse notwendig.

Aufgabe der Erfindung ist es, ein Verfahren zur Volumenstrombestimmung eine Schaumzubereitungsvorrichtung und eine Löschwasserpumpeneinrichtung zu schaffen, mit dem bzw. mit der bei hoher Genauigkeit die Volumenstrombestimmung beispielsweise beim Einsatz in Schaumzumischsystemen kostengünstiger als beim Stand der Technik möglich ist.

Diese Aufgabe wird durch ein Verfahren mit den Merkmalen des unabhängigen Anspruchs 1, einer Schaumzubereitungsvorrichtung mit den Merkmalen des unabhängigen Anspruchs 8 und einer Löschmittelpumpenvorrichtung mit den Merkmalen des unabhängigen Anspruchs 14 gelöst. Weiterbildungen der Erfindung sind in den Unteransprüchen dargestellt.

Das erfindungsgemäße Verfahren zur Volumenstrombestimmung umfasst folgende Schritte:
- Ermittlung einer Referenz-Drosselkurve einer Kreiselpumpe bei einer Referenz-Drehzahl (nₙ), wobei die Referenz-Drosselkurve eine Abhängigkeit eines Referenz-Drucks (pₙ) von einem Referenz-Volumenstrom (Qₙ) wiedergibt und Abspeicherung der Referenz-Drosselkurve in einer Speichereinheit,
- Messung eines Ist-Drucks (pᵢ) bei einer Ist-Drehzahl (nᵢ) der Kreiselpumpe und Berechnung eines zugehörigen Berechnungs-Referenz-Drucks (pₙ) der Referenz-Drosselkurve über die Beziehung pₙ = pᵢ (nₙ/ nᵢ) ²,
- Berechnung eines zum Berechnungs-Referenz-Druck (pₙ) gehörenden Berechnungs-Referenz-Volumenstroms (Qₙ) anhand der Referenz-Drosselkurve,
- Berechnung eines Ist-Volumenstroms (Qᵢ) über folgende Beziehung Qᵢ = Qₙ (nᵢ/ nₙ).

Damit ist es nicht mehr notwendig den Ist-Volumenstrom, der beispielsweise für die Zumischrate eines Schaummittels benötigt wird, insbesondere mit kostenaufwändigen Volumenstrommesseinrichtungen zu messen, sondern der Ist-Volumenstrom kann über die vorgekannten Beziehungen berechnet werden. Hierzu bedarf es lediglich der Ermittlung einer Referenz-Drosselkurve der eingesetzten Kreiselpumpe, die beispielsweise im Rahmen einer Individual-Pumpenprüfung nach EN 1028 am Prüfstand einmalig zu kalibrieren ist.

Aus dieser Referenz-Drosselkurve lassen sich dann in Kombination mit der Messung des Ist-Drucks die weiteren Kenngrößen berechnen.

Wie erwähnt können dadurch kostenaufwändige Volumenstrommessgeräte und zusätzliche Rohrleitungen zur Strömungsberuhigung entfallen, wodurch eine nicht unerhebliche Kosteneinsparung und auch eine Einsparung von Bauraum erzielbar sind.

Bei einer Weiterbildung der Erfindung wird das Verfahren für Zumischsysteme in Löschfahrzeugen verwendet bzw. in Zumischsystem in Löschfahrzeugen angewendet.

Alternativ ist es denkbar, das Verfahren für Löschwasserpumpvorrichtungen zu verwenden.

Bei einer Weiterbildung der Erfindung wird die Referenz-Drosselkurve in Form einer analytischen Gleichung der Speichereinheit abgespeichert.

Die Speichereinheit kann Bestandteil einer insbesondere an Bord des Löschfahrzeugs befindlichen Steuereinrichtung sein. Es ist alternativ jedoch auch möglich, nicht fahrzeuggestützte Speichereinheiten einzusetzen.

Bei einer Weiterbildung der Erfindung wird die Ist-Drehzahl der Kreiselpumpe über eine Drehzahlmesseinheit gemessen und/oder kann über eine Motordrehzahl eines mit der Kreiselpumpe gekoppelten Fahrzeugmotors des Löschfahrzeugs ermittelt werden.

Bei Änderung der Drehzahl, die beispielsweise über eine Motor-Bus-Steuerung, insbesondere Motor-CAN-Bus-Steuerung messbar gemacht werden kann, wird die Referenz-Drosselkurve entsprechend der Ähnlichkeitsbeziehungen nach oben oder unten verschoben.

Bei einer Weiterbildung der Erfindung wird anhand des berechneten Ist-Volumenstroms eine Zumischrate eines Schaummittels zum Löschwasser bestimmt.

Es ist möglich, dass das Schaummittel an einer Saugseite oder an einer Druckseite der Kreiselpumpe zugemischt wird.

Bei einer Weiterbildung der Erfindung wird der Volumenstrom des zugeführten Schaummittels mittels einer Volumenstrom-Messeinrichtung gemessen.

Die Erfindung umfasst ferner eine Schaumzubereitungsvorrichtung mit den Merkmalen des unabhängigen Anspruchs 8.

Die erfindungsgemäße Schaumzubereitungsvorrichtung weist eine Kreiselpumpe zur Förderung von Löschwasser auf, besitzt eine Speichereinheit, in der eine Referenz-Drosselkurve der Kreispumpe abgespeichert ist, wobei die Referenz-Drosselkurve eine Abhängigkeit eines Referenz-Drucks (pₙ) von einem Referenz-Volumenstrom (Qₙ) wiedergibt, besitzt ferner eine Druckmesseinrichtung zur Messung des Ist-Drucks (pᵢ) bei einer Ist-Drehzahl und weist eine elektronische Berechnungseinheit zur Berechnung einer zugehörigen Berechnungs-Referenz-Drucks (pₙ) der Referenz-Drosselkurve über die Beziehung pₙ = pᵢ (nₙ/ nᵢ) ², zur Berechnung eines Berechnungs-Referenz-Drucks (pₙ) gehörenden Berechnungs-Referenz-Volumenstroms (Qₙ) anhand der Referenz-Drosselkurve und zur Berechnung eines Ist-Volumenstroms (Qᵢ) über folgende Beziehung Qᵢ = Qₙ (nᵢ/ nₙ), und weist schließlich eine Schaummittelbereitstellungseinrichtung zur Bereitstellung von flüssigem Schaummittel und Zumischung des Schaummittels zum Löschwasser mittels einer Zumischrate auf Basis des berechneten Ist-Volumenstroms auf.

Bei dem Schaummittel kann es sich um ein Schaummittelkonzentrat handeln. Ferner kann es sich bei dem Schaummittel um ein solches handeln, das durch Eintrag von Energie gegenüber dem Ausgangszustand fließfähiger gemacht wird.

Zweckmäßigerweise umfasst die Schaumbereitstellungseinrichtung einen Vorratsbehälter zur Bevorratung von Schaummittel auf. Die Verflüssigung des Schaummittels oder Schaummittelkonzentrats kann dann beispielsweise durch Eintrag von Energie in den Vorratsbehälter erfolgen, beispielsweise durch Erhöhung des Innendrucks des Vorratsbehälters.

Die Schaumzubereitungsvorrichtung umfasst ferner eine Mischvorrichtung zur Mischung des Schaummittels mit Wasser zu einer Schaummittellösung.

Zweckmäßigerweise ist eine zwischen dem Vorratsbehälter und der Mischvorrichtung eingeschaltete Fördereinrichtung zur Förderung des Schaummittels in die Mischvorrichtung vorgesehen.

Die Fördereinrichtung kann beispielsweise eine Schaumpumpe oder einen Induktor aufweisen.

Es ist ferner möglich, dass die Schaumzubereitungsvorrichtung eine Druckfluidzuführvorrichtung zur Zuführung von Druckluft zur Herstellung eines Schaummittellösung / Druckfluid-Gemisches aufweist.

Die Erfindung umfasst ferner eine Löschwasserpumpenvorrichtung mit den Merkmalen des unabhängigen Anspruchs 14.

Die erfindungsgemäße Löschwasserpumpenvorrichtung ist ausgestattet mit einer Kreiselpumpe zur Förderung von Löschwasser, einer Speichereinheit, in der eine Referenz-Drosselkurve der Kreiselpumpe abgespeichert ist, wobei die Referenz-Drosselkurve eine Abhängigkeit eines Referenz-Drucks (pₙ) von einem Referenz-Volumenstrom (Qₙ) wiedergibt, einer Druckmesseinrichtung zur Messung des Ist-Drucks (pᵢ) bei einer Ist-Drehzahl (nᵢ) und einer elektronischen Berechnungseinheit zur Berechnung eines zugehörigen Berechnungs-Referenz-Drucks (pₙ) der Referenz-Drosselkurve über die Beziehung pₙ = pᵢ (nₙ/ nᵢ)², zur Berechnung eines zum Berechnungs-Referenz-Drucks (pₙ) gehörenden Berechnungs-Referenz-Volumenstroms (Qₙ) anhand der Referenz-Drosselkurve und zur Berechnung eines Ist-Volumenstroms (Qᵢ) über folgende Beziehung Qᵢ = Qₙ (nᵢ/ nₙ).

Die Löschwasserpumpeneinrichtung kann beispielsweise als Tragkraftspritze ausgebildet sein. Hier ist es besonders vorteilhaft, auf kostenintensive, viel Bauraum beanspruchende Volumenstrommessgeräte verzichten zu können.

Alternativ ist es jedoch auch denkbar, dass die Löschwasserpumpeneinrichtung durch eine im Löschfahrzeug eingebaute Einbaupumpenvorrichtung gebildet ist.

Ein bevorzugtes Ausführungsbeispiel der Erfindung ist in der Zeichnung dargestellt und wird im Folgenden näher erläutert. In der Zeichnung zeigen:
- Figur 1: ein schematisches Anlagendiagramm eines bevorzugten Ausführungsbeispiels der erfindungsgemäßen Schaumzubereitungsvorrichtung in der das erfindungsgemäße Verfahren zur Volumenstrombestimmung durchführbar ist,
- Figur 2: eine schematische Darstellung des Verfahrensablaufs des erfindungsgemäßen Verfahrens zur Volumenstrombestimmung dargestellt in einzelne Verfahrensschritten und
- Figur 3: eine schematische Darstellung von Drosselkurven einer Kreiselpumpe mit einer Referenz-Drosselkurve bei einer Referenz-Drehzahl.

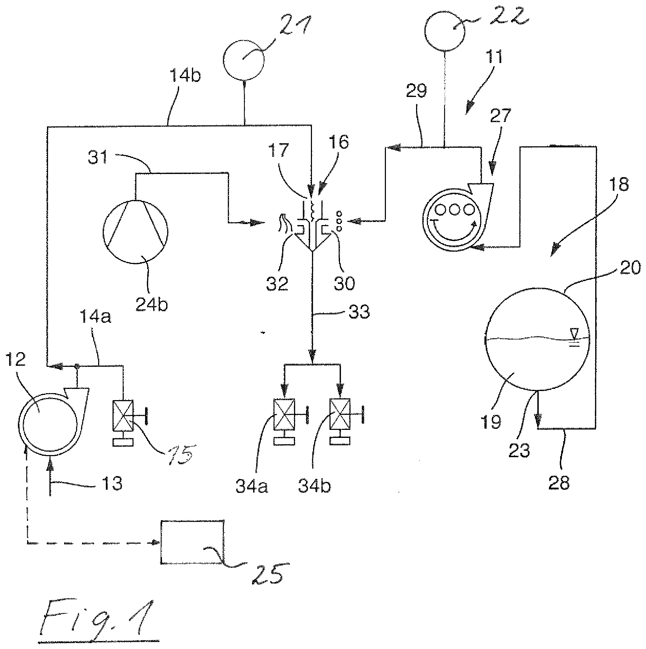

Die Figur 1 zeigt ein schematisches Anlagenschaubild eines bevorzugten Ausführungsbeispiels der erfindungsgemäßen Schaumzubereitungsvorrichtung 11. Im Folgenden ist die erfindungsgemäße Schaumzubereitungsvorrichtung 11 beispielhaft als in einem Feuerwehrfahrzeug eingebautes System beschrieben. Die Schaumzubereitungsvorrichtung 11 ist im beschriebenen Beispielsfall als Druckluftschaumanlage (DLS) ausgebildet.

Wie insbesondere in Figur 1 gezeigt, umfasst die Schaumzubereitungsvorrichtung 11 eine Löschwasserpumpe in Form einer Kreiselpumpe 12, die auch als Feuerlöschkreiselpumpe zu bezeichnen ist. Die Kreiselpumpe wird durch den Fahrzeugantrieb oder einen separaten Antrieb, beispielsweise einen elektrischen Zusatzantrieb, angetrieben.

Die Kreiselpumpe 12 ist in der Lage Löschwasser über Saugleitungen 13, von denen im Anlagenschema lediglich eine einzelne dargestellt ist, anzusaugen und über Druckleitungen 14a, 14b druckseitig abgegeben.

Im gezeigten Beispielsfall ist eine der Druckleitungen 14a über einen geeigneten Feuerwehrschlauch mit einem Strahlrohr 15 verbunden. Die andere Druckleitung 14b führt zu einer weiteren Komponente der Schaumzubereitungsvorrichtung 11, nämlich einer Mischvorrichtung 16. Die Mischvorrichtung 16 besitzt einen zugehörigen Löschwasser-Eingang 17, über den mit der Kreiselpumpe 12 gefördertes Löschwasser zuführbar ist.

Wie ferner in Figur 1 gezeigt, umfasst die Schaumzubereitungsvorrichtung 11 eine Schaummittelbereitstellungseinrichtung 18 zur Bereitstellung eines flüssigen Schaummittels 19. Die Schaummittelbereitstellungseinrichtung 18 umfasst einen Vorratsbehälter 20 zur Bevorratung des Schaummittels 19. Der Vorratsbehälter 20 ist im Beispielsfall als Drucktank ausgebildet.

Es ist möglich, dass das Schaummittel 19 in Form eines viskosen Ausgangs-Schaummittels im Vorratsbehälter bevorratet wird und durch Energieeintrag zu einem fließfähigeren Arbeits-Schaummittel verflüssigt wird.

Die Schaummittelbereitstellungseinrichtung 18 besitzt ferner eine Schaumpumpe 27, über die das flüssige Schaummittel 19 aus dem Vorratsbehälter 20 über einen Schaummittel-Ausgang 23 und über eine Schaummittel-Ansaugleitung 28 angesaugt und über eine Schaummittel-Druckleitung 29 abgegeben wird. Die Schaummittel-Druckleitung 29 mündet über einen Schaummittel-Eingang 30 in die Mischvorrichtung 16.

Für die Schaumzubereitung wird das Schaummittel 19 am Schaummittel-Ausgang 23 vom Vorratsbehälter 20 abgezogen und über die Schaummittel-Druckleitung 29 der Mischvorrichtung 16 zugeführt. Gleichzeitig wird Löschwasser von der Kreiselpumpe 12 über die Saugleitung 13 angesaugt und über die Druckleitung 14a über den Löschwasser-Eingang ebenfalls der Mischvorrichtung 16 zugeführt.

Im beschriebenen Beispielsfall der Druckluftschaumanlage (DLS) umfasst die Schaumzubereitungsvorrichtung 11 ferner einen Injektions-Druckluft-Kompressor 24b, der Druckluft über die Injektionsleitung 31 und den Druckluft-Eingang 32 der Mischvorrichtung 16 zuführt, so dass der in der Mischvorrichtung 16 vorhandenen Schaummittellösung zusätzlich noch Druckluft injiziert wird.

Dadurch entsteht ein Schaummittellösung/ Luftgemisch. Das Schaummittel-Luftgemisch wird dann über eine Ausgangsleitung 33 zugeordneten Strahlrohren 34a, 34b zugeführt.

Über die Strahlrohre kann dann das Schaummittellösung/ Luftgemisch für die Brandbekämpfung eingesetzt werden.

Ein wichtiger Parameter, der in der Mischvorrichtung 16 einzustellen ist, ist die sogenannte Zumischrate (ZMR), die das Mischungsverhältnis des Löschwassers zum Schaummittel beschreibt.

Hier kommt die erfindungsgemäße Schaumzubereitungsvorrichtung 11 ohne ein kostenintensives Volumenstrommessgerät für das Löschwasser aus, sondern es bedarf lediglich eines Druckmessgerätes 21 zur Messung des Ist-Drucks pᵢ in der Druckleitung 14b.

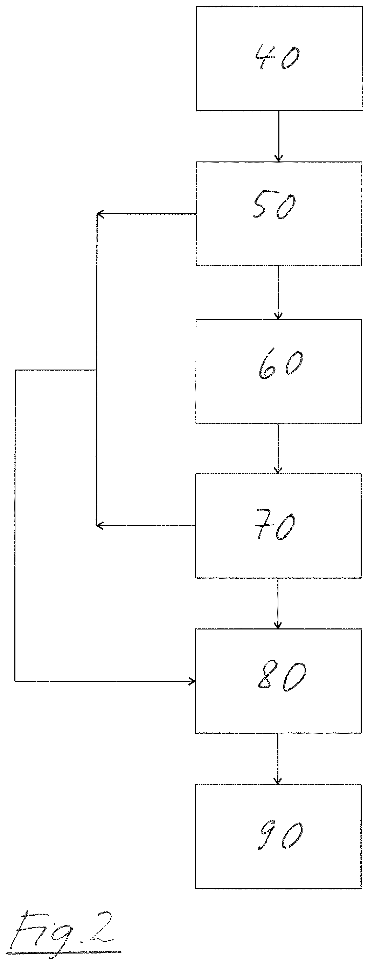

Auf Seiten der Schaummittelbereitstellungseinrichtung 18 ist ein Volumenstrommessgerät 22 vorgesehen, das den Volumenstrom in der Schaummitteldruckleitung 29 misst. Die für die Bestimmung der Zumischrate erforderliche Größe des Volumenstroms des Löschwassers wird mit dem erfindungsgemäßen Verfahren folgendermaßen bestimmt:
Zunächst wird eine Referenz-Drosselkurve 35 der Kreiselpumpe 12 bei einer Referenz-Drehzahl nₙ ermittelt. Die Ermittlung der Referenz-Drosselkurve 35 erfolgt im Rahmen der Individual-Pumpenprüfung nach EN 1028 anhand des Nenn-/ Referenzpunktes bei nₙ, pₙ und Qₙ am Prüfstand. Es erfolgt eine einmalige Kalibrierung. Die Ermittlung der Referenz-Drosselkurve 35 ist der erste Verfahrensschritt des erfindungsgemäßen Verfahrens und ist im Verfahrensablauf-Schema der Figur 2 mit "Ermittlung-Drosselkurve 40" bezeichnet.

Die so ermittelte Referenz-Drosselkurve 35 wird in einer Speichereinheit, die Bestandteil einer an Bord des Feuerwehrfahrzeugs befindlichen Steuereinrichtung 25 ist, abgespeichert. Die Abspeicherung der der Referenz-Drosselkurve 35 ist der zweite Verfahrensschritt des erfindungsgemäßen Verfahrens und ist im Verfahrensablauf-Schema der Figur 2 mit "Abspeicherung-Drosselkurve 50" bezeichnet.

Wie bereits erwähnt, wird die Kreiselpumpe 12 durch den Fahrzeugantrieb des Feuerwehrfahrzeugs angetrieben. Somit kann die Drehzahl der Kreiselpumpe 12 über die Motordrehzahl des Fahrzeugantriebs gesteuert werden. Hierzu dient eine Motor-CAN-Bus-Steuerung.

Der Ist-Druck pᵢ in der Druckleitung 14b wird bei einer Ist-Drehzahl nᵢ, die höher oder tiefer als die Referenz-Drehzahl nₙ liegen oder der Referenz-Drehzahl nₙ entsprechen kann mittels des Druckmessgeräts 21 gemessen und die gemessenen Messwerte werden der Steuereinrichtung 25 übermittelt. Die Messung des Ist-Drucks pᵢ ist der dritte Verfahrensschritt des erfindungsgemäßen Verfahrens und ist im Verfahrensablauf-Schema der Figur 2 mit "Messung Ist-Druck 60" bezeichnet.

Über eine ebenfalls in der Steuereinrichtung 25 enthaltene Rechnereinheit wird dann auf Basis des gemessenen Ist-Drucks pᵢ bei der Ist-Drehzahl nᵢ ein zugehöriger Berechnungs-Referenz-Druck pₙ der Referenz-Drosselkurve über die Beziehung pₙ = pᵢ (nₙ/ nᵢ) ² berechnet. Die Berechnung des Referenz-Drucks pₙ ist der vierte Verfahrensschritt des erfindungsgemäßen Verfahrens und ist im Verfahrensablauf-Schema der Figur 2 mit "Berechnung Referenz-Druck 70" bezeichnet.

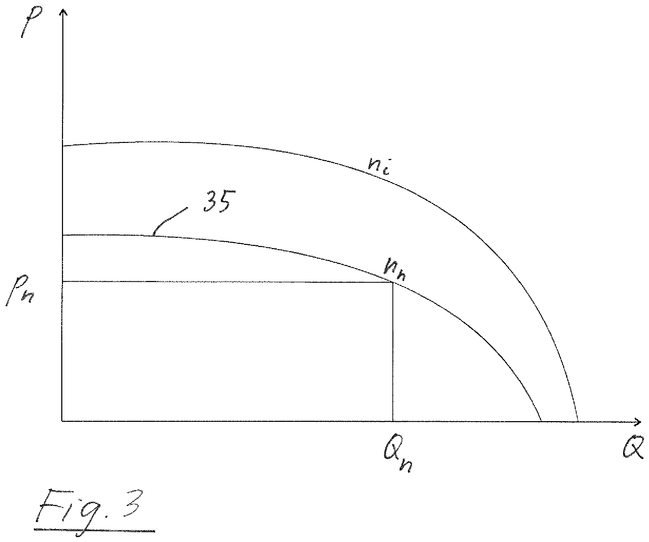

Wie insbesondere in Figur 3 gezeigt, werden bei den Drosselkurven der Kreiselpumpe 12 der Druck (p) über dem Volumenstrom (Q) aufgetragen. Der Druck (p) ist also eine Funktion des Volumenstroms.

Wie ferner in Figur 3 gezeigt, ist die Referenz-Drosselkurve bei der Referenz-Drehzahl nₙ bekannt und in der Speichereinheit abgespeichert (Verfahrensschritte 40 und 50). Eine Erhöhung der Drehzahl bewirkt dann eine Verschiebung der Drosselkurve entsprechend einer Ähnlichkeitsbeziehung nach oben, eine Verringerung der Drehzahl würde eine Verschiebung der Kurve nach unten bewirken.

Gemäß dem erfindungsgemäßen Verfahren wird dann auf Basis des Berechnungs-Referenz-Drucks pₙ ein zugehöriger Berechnungs-Referenz-Volumenstrom Qₙ anhand der Referenz-Drosselkurve 35 berechnet. Die Berechnung des Referenz-Volumenstroms Qₙ ist der fünfte Verfahrensschritt des erfindungsgemäßen Verfahrens und ist im Verfahrensablauf-Schema der Figur 2 mit "Berechnung Referenz-Volumenstrom 80" bezeichnet.

Schließlich erfolgt die Berechnung des Ist-Volumenstroms Qᵢ über die Beziehung Qᵢ = Qₙ (nᵢ/ nₙ). Die Berechnung des Ist-Volumenstroms Qₙ ist der sechste Verfahrensschritt des erfindungsgemäßen Verfahrens und ist im Verfahrensablauf-Schema der Figur 2 mit "Berechnung Ist-Volumenstrom 90" bezeichnet

Somit kann der Ist-Volumenstrom Qᵢ des Löschwassers ohne den Einsatz eines Volumenstrommessgerätes nur durch Einsatz eins Druckmessgerätes in Kombination mit der Referenzdrosselkurve 35 berechnet werden. Dieser berechnete Wert des Ist-Volumenstroms wird dann mit dem Schaummittel-Ist-Volumenstrom, der durch das Volumenstrommessgerät in der Schaummittel-Druckleitung 29 gemessen wird, in Beziehung gesetzt und ergibt dann die erforderliche Zumischrate (ZMR).

Das erfindungsgemäße Verfahren lässt sich alternativ zum Einsatz bei Schaumzubereitungsvorrichtungen auch zur Volumenstrombestimmung in Löschwasserpumpenvorrichtungen anwenden, beispielsweise in Tragkraftspritzen oder Einbaupumpenvorrichtungen.

## Patentansprüche

1. Verfahren zur Volumenstrombestimmung, das Verfahren mit folgenden Schritten:
- Ermittlung einer Referenz-Drosselkurve (35) einer Kreiselpumpe (12) bei einer Referenz-Drehzahl (nₙ), wobei die Referenz-Drosselkurve (35) eine Abhängigkeit eines Referenz-Drucks (pₙ) von einem Referenz-Volumenstrom (Qₙ) wiedergibt und Abspeicherung der Referenz-Drosselkurve (35) in einer Speichereinheit,
- Messung eines Ist-Drucks (pᵢ) bei einer Ist-Drehzahl (nᵢ) und Berechnung eines zugehörigen Berechnungs-Referenz-Drucks (pₙ) der Referenz-Drosselkurve (35) über die Beziehung pₙ = pᵢ (nₙ/ nᵢ) ²,
- Berechnung eines zum Berechnungs-Referenz-Druck (pₙ) gehörenden Berechnungs-Referenz-Volumenstroms (Qₙ) anhand der Referenz-Drosselkurve (35),
- Berechnung eines Ist-Volumenstroms (Qᵢ) über folgende Beziehung Qᵢ = Qₙ (nᵢ/ nₙ).

2. Verfahren nach Anspruch 1, **dadurch gekennzeichnet, dass** es für Schaumzumischsysteme in Löschfahrzeugen verwendet wird.

3. Verfahren nach Anspruch 1, **dadurch gekennzeichnet, dass** es für eine Löschwasserpumpenvorrichtung verwendet wird.

4. Verfahren nach Anspruch nach einem der vorhergehenden Ansprüche, **dadurch gekennzeichnet, dass** die Referenz-Drosselkurve (35) in Form einer analytischen Gleichung in der Speichereinheit abgespeichert wird.

5. Verfahren nach Anspruch 4, **dadurch gekennzeichnet, dass** die Speichereinheit Bestandteil einer insbesondere an Bord des Löschfahrzeugs befindlichen Steuereinrichtung (25) ist.

6. Verfahren nach einem der vorhergehenden Ansprüche, **dadurch gekennzeichnet, dass** die Ist-Drehzahl (nᵢ) der Kreiselpumpe (12) über eine Drehzahlmesseinheit gemessen und/oder über eine Motordrehzahl eines mit der Kreiselpumpe (12) gekoppelten Fahrzeugantriebs des Löschfahrzeugs ermittelt wird.

7. Verfahren nach einem der vorhergehenden Ansprüche, **dadurch gekennzeichnet, dass** anhand des berechneten Ist-Volumenstroms eine Zumischrate eines Schaummittels (19) zum Löschwasser bestimmt wird.

8. Verfahren nach Anspruch 7, **dadurch gekennzeichnet, dass** das Schaummittel (19) an einer Saugseite oder einer Druckseite der Kreiselpumpe (12) zugemischt wird.

9. Verfahren nach einem der vorhergehenden Ansprüche, **dadurch gekennzeichnet, dass** der Volumenstrom des zugeführten Schaummittels (19) mittels einer Volumenstrom-Messeinrichtung gemessen wird.

10. Schaumzubereitungsvorrichtung, mit einer Kreiselpumpe (12) zur Förderung von Löschwasser, einer Speichereinheit, in der eine Referenz-Drosselkurve (35) der Kreiselpumpe 12) abgespeichert ist, wobei die Referenz-Drosselkurve (35) eine Abhängigkeit eines Referenz-Drucks (pₙ) von einem Referenz-Volumenstrom (Qₙ) wiedergibt, einer Druckmesseinrichtung zur Messung des Ist-Drucks (pᵢ) bei einer Ist-Drehzahl (nᵢ) und einer elektronischen Berechnungseinheit zur Berechnung eines zugehörigen Berechnungs-Referenz-Drucks (pₙ) der Referenz-Drosselkurve (35) über die Beziehung pₙ = pᵢ (nₙ/ nᵢ) ², zur Berechnung eines zum Berechnungs-Referenz-Drucks (pₙ) gehörenden Berechnungs-Referenz-Volumenstroms (Qₙ) anhand der Referenz-Drosselkurve (35) und zur Berechnung eines Ist-Volumenstroms (Qᵢ) über folgende Beziehung Qᵢ = Qₙ (nᵢ/ nₙ), und mit einer Schaummittelbereitstellungseinrichtung (18) zur Bereitstellung eines flüssigem Schaummittels (19) und Zumischung des Schaummittels (19) zum Löschwasser mittels einer Zumischrate auf Basis des berechneten Ist-Volumenstroms (Qᵢ).

11. Schaumzubereitungsvorrichtung nach Anspruch 10, **dadurch gekennzeichnet, dass** die Schaumbereitstellungseinrichtung (18) einen Vorratsbehälter (20) zur Bevorratung von Schaummittel (19) aufweist.

12. Schaumzubereitungsvorrichtung nach Anspruch 10 oder 11 **gekennzeichnet durch** eine Mischvorrichtung (16) zur Mischung des Schaummittels (19) mit Löschwasser zu einer Schaummittellösung.

13. Schaumzubereitungsvorrichtung nach einem der Ansprüche 10 bis 12, **gekennzeichnet durch** eine Druckfluidzuführvorrichtung zur Zuführung von Druckluft zur Herstellung eines Schaummittellösung/Druckfluid-Gemisches.

14. Löschwasserpumpeneinrichtung mit einer Kreiselpumpe (12) zur Förderung von Löschwasser, einer Speichereinheit, in der eine Referenz-Drosselkurve (35) der Kreiselpumpe 12) abgespeichert ist, wobei die Referenz-Drosselkurve (35) eine Abhängigkeit eines Referenz-Drucks (pₙ) von einem Referenz-Volumenstrom (Qₙ) wiedergibt, einer Druckmesseinrichtung zur Messung des Ist-Drucks (pᵢ) bei einer Ist-Drehzahl (nᵢ) und einer elektronischen Berechnungseinheit zur Berechnung eines zugehörigen Berechnungs-Referenz-Drucks (pₙ) der Referenz-Drosselkurve (35) über die Beziehung pₙ = pᵢ (nₙ/ nᵢ) ², zur Berechnung eines zum Berechnungs-Referenz-Drucks (pₙ) gehörenden Berechnungs-Referenz-Volumenstroms (Qₙ) anhand der Referenz-Drosselkurve (35) und zur Berechnung eines Ist-Volumenstroms (Qᵢ) über folgende Beziehung Qᵢ = Qₙ (nᵢ/ nₙ).

15. Löschwasserpumpeneinrichtung nach Anspruch 14, **dadurch gekennzeichnet, dass** sie als Tragkraftspritze ausgebildet ist.
